**Europäisches Patentamt**

**European Patent Office**

**Office européen des brevets**

(19)

(11) Veröffentlichungsnummer: **0 087 431**
**B1**

(12) # EUROPÄISCHE PATENTSCHRIFT

(45) Veröffentlichungstag der Patentschrift:
**25.06.86**

(51) Int. Cl.⁴: **G 01 F 3/18**

(21) Anmeldenummer: **82902437.1**

(22) Anmeldetag: **05.08.82**

(86) Internationale Anmeldenummer:
**PCT/DE 82/00161**

(87) Internationale Veröffentlichungsnummer:
**WO 83/01108 (31.03.83** Gazette 83/8)

(54) **VORRICHTUNG ZUM MESSEN VON FLÜSSIGKEITSMENGEN.**

(30) Priorität: **14.09.81 DE 3136387**

(43) Veröffentlichungstag der Anmeldung:
**07.09.83 Patentblatt 83/36**

(45) Bekanntmachung des Hinweises auf die Patenterteilung:
**25.06.86 Patentblatt 86/26**

(84) Benannte Vertragsstaaten:
**AT CH FR GB LI NL SE**

(56) Entgegenhaltungen:
**CH - A - 338 029**
**DE - B - 2 251 304**
**DE - C - 713 374**
**DE - C - 724 685**
**US - A - 1 971 559**
**US - A - 2 337 310**
**US - A - 2 565 287**

(73) Patentinhaber: **DEUTSCHE GERÄTEBAU GMBH,**
**Ferdinand-Henze-Strasse 9, D-4796 Salzkotten (DE)**

(72) Erfinder: **HÜSTER, Bernhard, Walburgisstrasse 12,**
**D-4799 Borchen/Alfen (DE)**

(74) Vertreter: **Zoepke, Carl O., Erhardtstrasse 8,**
**D-8000 München 5 (DE)**

ACTORUM AG

**Beschreibung**

Die Erfindung bezieht sich auf eine Vorrichtung zum Messen von Fluidmengen mit zwei in einem Gehäuse einander gegenüberliegend angeordneten Zylindern, deren Kolben zu den äusseren Totpunkten hin getrennte Arbeitsräume und zu den inneren Totpunkten hin einen gemeinsamen Arbeitsraum bilden und über ein Gestänge mit Kurbelzapfen verbunden sind, welche in Bezug auf eine zweiteilig ausgebildete Kurbelwelle, die einen oberen und einen unteren Kurbelwellenteil aufweist, exzentrisch und um 60° zueinander winkelversetzt gelagert sind, wobei das obere Kurbelwellenteil oberhalb des Zylindergehäuses mit einem Mittel verbunden ist, das die zu messende Flüssigkeit über darin vorgesehene Kanäle zuführt und die Flüssigkeit mit einem Ablauf verbindet.

Derartige Vorrichtungen, die auch Flüssigkeitsmessmotoren genannt werden, dienen der volumetrischen Messung von Flüssigkeiten, vorwiegend zur Messung von dünnflüssigen Mineralölen in Zapfsäulen. Hierbei ist das Schluckvolumen bei einer Umdrehung der Abtriebswelle auf ein vorbestimmtes Volumen der durchfliessenden Flüssigkeit von beispielsweise 0,5 l oder auf ein ganzzahliges Vielfaches davon eingestellt.

Eine Vorrichtung der eingangs genannten Art ist aus der US-A 2 337 310 bekannt. Die Kolbenstangen der beiden Kolben sind hierbei zur Anlenkung an die Kurbelzapfen doppelt abgesetzt und an den Kolben jeweils schwenkbar befestigt, da sie mit ihren kurbelseitigen Enden mit den Kurbelzapfen umlaufen.

Bei dieser bekannten Vorrichtung besteht nicht die Möglichkeit, den Hubweg der Kolben zu verstellen, um hierdurch die Durchflussmenge der zu messenden Flüssigkeit für einen Zyklus einstellen und nachregulieren zu können.

Bei einer durch die US-A 1 971 559 bekannten Vorrichtung zum Messen von Flüssigkeitsmengen sind die sich gegenüberliegenden Kolben axial versetzt angeordnet und über gelenkig am Kolben befestigte Kolbenstangen und ein mehrere Scheiben aufweisendes Kurbelgetriebe miteinander verbunden. Die axial versetzte Anordnung der Kolben erfordert ein asymmetrisch ausgestaltetes Zylindergehäuse, dessen Herstellung entsprechende Einrichtungen notwendig macht.

Da bei dieser bekannten Vorrichtung die Kurbelzapfen an den Kurbelscheiben exzentrisch und um 90° zueinander winkelversetzt angeordnet sind, ergibt sich ein gegenüber der Bauart nach der US-A 2 337 310 abweichendes Kolbenspiel.

Zur Hubverstellung des einen Kolbens ist bei dieser bekannten Vorrichtung am oberen Ende des diesem Kolben zugeordneten unteren Kurbelwellenteils eine Nockenscheibe vorgesehen, durch die der diesem Kolben zugeordnete Kurbelzapfen in einem radial verlaufenden Schlitz zur Achse der Kurbelwelle hin- und herbewegt werden kann. Nachteilig bei dieser bekannten Bauart ist der konstruktive Aufwand im Bereich des Kurbelgetriebes.

Bei einem Flüssigkeitsmessmotor mit vier kreuzweise angeordneten Zylindern nach der DE-C 724 685 ist zur Hubverstellung sämtlicher vier Kolben der gemeinsame Kurbelzapfen der einteilig ausgebildeten Kurbelwelle von einer exzentrischen Hülse umgeben, auf der Gleitstücke angeordnet sind, die von einer von den Kolbenstangen gebildeten Kulisse aufgenommen werden. Eine Verdrehung der exzentrischen Hülse wirkt sich auf eine Hubveränderung sämtlicher Kolben aus.

Ein ähnlich gestalteter Kolbenflüssigkeitsmesser ist aus der DE-C 713 374 bekannt. Hierbei sind die Kolben jedes Zylinderpaares über je eine Verbindungsstange mit einem gemeinsamen Kurbelzapfen der Kurbelwelle verbunden, die über eine Lagerrolle in zwei senkrecht zueinander verlaufende Gleitführungen geführt wird.

Der Erfindung liegt die Aufgabe zugrunde, bei einer Vorrichtung zum Messen von Fluiden der eingangs genannten Gattung die Vorteile eines Zwei-Zylinder-Flüssigkeitsmessmotors bei einfacher Herstellung mit den Vorteilen einer zweiteiligen Kurbelwelle und damit der Möglichkeit zu verbinden, durch Verstellung des Kurbelradius eine Veränderung des Kolbenhubes des einen der beiden Kolben herbeiführen zu können, wodurch sich eine besonders feinfühlige Justierung der Durchflussmenge für einen Zyklus ergibt.

Diese Aufgabe wird erfindungsgemäss dadurch gelöst, dass das die Kolben und die Kurbelzapfen miteinander verbindende Gestänge als sich gegenseitig parallel führende Kreuzschleifen ausgebildet ist, dass die Kurbelzapfen von einer Führungsscheibe getragen sind, die zwischen den Wellenenden der Kurbelwelle räumlich getrennt von diesen angeordnet ist und dass am unteren Kurbelwellenteil zur Verstellung des Hubes des zugehörigen Kolbens der zugehörige Kurbelzapfen in einer sich mit dem unteren Kurbelwellenteil mitdrehenden Exzenterhülse gelagert ist, die durch eine verstellbare Schnecke im Drehsinn des unteren Kurbelwellenteils drehbar gehalten ist.

Die bezüglich der Kurbelwellenachse einander gegenüberliegende Anordnung der Kolben hat zunächst den wesentlichen Vorteil, dass für beide Kolben identische Zylindergehäuse verwendet werden können. Dadurch, dass die Kolben durch ihnen jeweils zugeordnete Kreuzschleifen mit zwei getrennten Kurbelzapfen getriebemässig verbunden sind, lässt sich ein Kurbelzapfen dazu verwenden, um dessen Kurbelradius zur Veränderung des Hubweges des zugehörigen Kolbens verstellen zu können. Es ergibt sich hierdurch eine Verdoppelung des Feinheitsgrades der Justierung im Vergleich zu Kolbenhubstellungen, die sich auf beide Kolben verteilen.

Es entsteht der weitere Vorteil, dass aufgrund der zweiteiligen Ausführung und der formschlüssig miteinander geführten Kurbelwelle die Verwendung von als Geradschub-Kurbeln wirkenden Kreuzschleifen möglich ist, die sich gegenseitig formschlüssig führen, wodurch sich Herstellung und Verwendung weiterer Führungselemente innerhalb des Zylindergehäuses erübrigen.

Zur gegenseitigen Führung der Kreuzschleifen sind diese an ihrem der Befestigung am jeweiligen Kolben entgegengesetzten Ende auf einem die Führungsscheibe zwischen sich aufnehmenden Abstand in Längsschlitzen der jeweils benachbarten Kreuzschleife geführt. Durch diese gegenseitige Führung der Kreuzschleifen werden Kippbewegungen verhindert.

Unter einer Führungsscheibe soll hier jedes drehbare Element zu verstehen sein, welches exzentrisch zu seiner Drehachse Kurbelzapfen aufnimmt. Mit den Enden der Wellenteile der zweiteiligen Kurbelwelle sind die Kurbelzapfen über Kurbeln gekoppelt. Dadurch, dass das Wellenteil, welches über seine Kurbel den in seiner Exzentrizität veränderbaren Kurbelzapfen aufweist, in einer Exzenterhülse gelagert ist, die über eine an ihrem äusseren an der Gehäusebohrung vorstehenden Ende vorgesehene Verzahnung mittels der verstellbaren Schnecke verdreht werden kann, bewegt sich auch die Führungsscheibe aus ihrer normalerweise zum anderen Wellenteil konzentrischen Lage geringfügig in eine exzentrische Lage und läuft beim Kolbenspiel in dieser Lage um. Bei Verstellung der Schnecke und der Exzenterhülse in der einen Drehrichtung wird auf den in seiner Exzentrizität veränderbaren Kurbelzapfen beim Umlauf eine Zentrifugalkraft und bei Verstellung in der entgegengesetzten Drehrichtung eine Zentrifugalkraft ausgeübt, die jeweils zur Justierung des Hubweges des zugehörigen Kolbens zur Kompensation von Verschleiss ausgenutzt werden kann.

Die zur Verstellung der Exzenterhülse auf dem einen Kurbelwellenteil dienende Schnecke wird durch eine Feder in ihrer Ruhelage gehalten.

Um einen unbefugten Eingriff zu verhindern, sind die Exzenterhülse und die Schnecke durch eine flüssigkeitsdichte Schraubkappe abgedeckt, die gegen Aufschrauben plombiert werden kann.

Ein in der Beschreibung näher erläutertes Ausführungsbeispiel der Vorrichtung zum Messen von Fluiden nach der Erfindung ist in den Zeichnungen wiedergegeben. Es zeigen

Fig. 1 einen Längsmittelschnitt durch das Zylindergehäuse für zwei bezüglich der Kurbelwellenachse einander gegenüberliegend angeordnete Kolben,

Fig. 2 einen Querschnitt durch das Zylindergehäuse in Höhe der Linie II-II in Fig. 1.

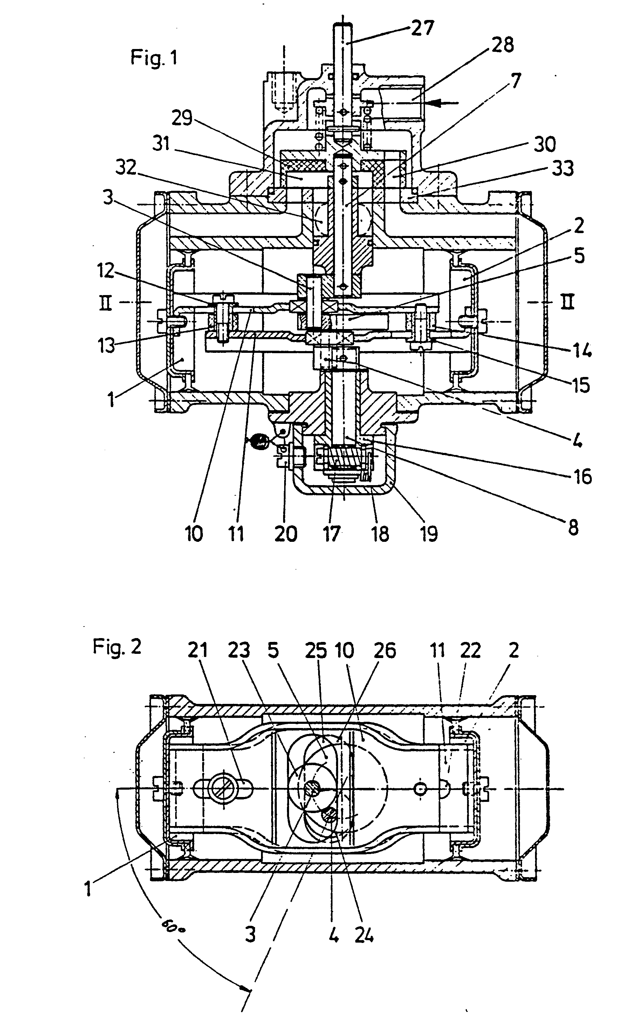

Wie Fig. 1 im Längsmittelschnitt zeigt, sind die Zylindergehäusehälften zur Aufnahme der zwei bezüglich der Kurbelwellenachse einander gegenüberliegenden Kolben 1, 2 identisch ausgebildet und durch die Wellenteile 7 und 8 einer zweiteiligen Kurbelwelle unterteilt. Seitlich aussen sind die Zylindergehäusehälften durch Gehäusedeckel abgeschlossen, die zu den oberen Totpunkten hin getrennte Arbeitsräume der beiden Kolben begrenzen. Zum unteren Totpunkt hin bilden die beiden Kolben einen gemeinsamen Arbeitsraum. Die Kolben wirken derart zusammen, dass einer der beiden Kolben eine Hubbewegung ausführt, während der andere Kolben gerade einen Totpunkt durchläuft.

Zu diesem Zweck wird die Relativbewegung der Kolben zueinander auf die zwei getrennten Kurbelzapfen 3, 4 über je eine jedem Kolben zugeordnete, als Geradschub-Kurbel wirkende Kreuzschleife 10, 11 übertragen, deren eines Ende mit dem Kolben fest verbunden ist. Die Kreuzschleifen beider Kolben erstrecken sich parallel zueinander auf Abstand und sind zur Geradführung an dem der Befestigungstelle mit dem Kolben abgewandten Ende mit jeweils einem Längsschlitz 21, 22 versehen, in denen an der benachbarten Kreuzschleife mittels Schrauben 12, 15 befestigte Gleitstücke 13, 14 aus Kunststoff laufen.

Zur Kraftübertragung auf die Kurbelzapfen sind die Kreuzschleifen 10, 11 mit Langlochführungen 25, 26 versehen, die sich quer zur Kolbenhubbewegung und zur Achse des Kurbelzapfens erstrecken und die Kurbelzapfen 3, 4 umgebende Lagerrollen 23, 24 aufnehmen.

Die mit dem Kolben 1 verbundene Kreuzschleife 10 arbeitet demnach mit dem Kurbelzapfen 3 und die mit dem Kolben 2 verbundene Kreuzschleife 11 mit dem Kurbelzapfen 4 zusammen.

Beide Kurbelzapfen sind auf einer Führungsscheibe 5 angeordnet, die konzentrisch zu den Wellenteilen 7, 8 zwischen den Kreuzschleifen 10, 11 liegt. In bezug auf die Achse dieser Führungsscheibe 5 sind die beiden Kurbelzapfen 3, 4 exzentrisch und unter einem Bogenwinkel von 60° an der Führungsscheibe befestigt, wie dies Fig. 2 wiedergibt. Der Kurbelzapfen 3 überträgt die Hubbewegung des Kolbens 1 in eine Drehbewegung des Wellenteils 7, während der Kurbelzapfen 4 die Hubbewegung des Kolbens 2 in eine Drehbewegung des Wellenteils 8 umformt.

Zur Hubwegeinstellung und -änderung des Kolbens 2 ist der Kurbelzapfen 4 in seiner Exzentrizität veränderbar. Hierzu ist dieser Kurbelzapfen in einer sich mit dem unteren Wellenteil 8 mitdrehenden Exzenterhülse 16 gelagert, die durch eine verstellbare Schnecke 17 im Drehsinn des unteren Wellenteils 8 drehbar gehalten ist. In ihrer Ruhelage wird die Schnecke 17 durch eine Feder 18 gehalten.

Exzenterhülse 16 und Schnecke 17 sind durch eine flüssigkeitsdicht abschliessende Schraubkappe 19 abgedeckt. Nach dem Aufschrauben dieser Schraubkappe auf einen die Exzenterhülse sowie die Zylindergehäusehälften aufnehmenden Lagerflansch lässt sich die Schraubkappe plombieren, wozu sie mit einem durch die Plombierung geschützten Stopfen 20 versehen ist.

Die Arbeitsweise der Vorrichtung ist derart, dass die zu messende, in das Gehäuse einlaufende Flüssigkeit die beiden Kolben verschiebt, die wiederum über das Kurbelgetriebe die Kurbelwelle in Drehung versetzen. Der Hubweg des Kolbens 1 wird durch die Exzentrizität des Kurbelzap-

fens 3 bestimmt und liegt fest. Durch Veränderung der Exzentrizität des Kurbelzapfens 4 mittels der einstellbaren Schnecke 17 an der Exzenterhülse 16 kann der Hubweg des Kolbens 2 eingestellt und nachreguliert werden. Die in Drehung versetzte Kurbelwelle steht antriebsmässig mit einer in der Zeichnung nicht dargestellten Anzeigevorrichtung in Verbindung, anhand der die Grösse der abgegebenen Flüssigkeitsmenge abgelesen werden kann.

**Patentansprüche**

1. Vorrichtung zum Messen von Fluidmengen mit zwei in einem Gehäuse einander gegenüberliegend angeordneten Zylindern, deren Kolben (1, 2) zu den äusseren Totpunkten hin getrennte Arbeitsräume und zu den inneren Totpunkten hin einen gemeinsamen Arbeitsraum bilden und über ein Gestänge mit Kurbelzapfen (3, 4) verbunden sind, welche in Bezug auf eine zweiteilig ausgebildete Kurbelwelle (7, 8), die einen oberen und einen unteren Kurbelwellenteil aufweist, exzentrisch und um 60° zueinander winkelversetzt gelagert sind, wobei das obere Kurbelwellenteil (7) oberhalb des Zylindergehäuses mit einem Mittel (29) verbunden ist, das die zu messende Flüssigkeit über darin vorgesehene Kanäle (30) zuführt und die Flüssigkeit mit einem Ablauf verbindet, dadurch gekennzeichnet, dass das die Kolben (1, 2) und die Kurbelzapfen (3, 4) miteinander verbindende Gestänge als sich gegenseitig parallel führende Kreuzschleifen (10, 11) ausgebildet ist, dass die Kurbelzapfen (3, 4) von einer Führungsscheibe (5) getragen sind, die zwischen den Wellenenden (7, 8) der Kurbelwelle räumlich getrennt von diesen angeordnet ist und dass am unteren Kurbelwellenteil (8) zur Verstellung des Hubes des zugehörigen Kolbens (2) der zugehörige Kurbelzapfen (4) in einer sich mit dem unteren Kurbelwellenteil (8) mitdrehenden Exzenterhülse (16) gelagert ist, die durch eine verstellbare Schnecke (17) im Drehsinn des unteren Kurbelwellenteils (8) drehbar gehalten ist.

2. Vorrichtung nach Anspruch 1, dadurch gekennzeichnet, dass die Kreuzschleifen (10, 11) an ihrem der Befestigung am jeweiligen Kolben (1, 2) entgegengesetzten Ende auf einem die Führungsscheibe (5) zwischen sich aufnehmenden Abstand in Längsschlitzen (21, 22) der jeweils benachbarten Kreuzschleife geführt sind.

3. Vorrichtung nach Anspruch 2, dadurch gekennzeichnet, dass die dem Kolben abgewandten Enden der Kreuzschleifen (10, 11) mittels Schrauben (12, 15) befestigte Gleitstücke (13, 14) tragen, die in den Längsschlitzen (21, 22) der jeweils benachbarten Kreuzschleife laufen.

4. Vorrichtung nach Anspruch 1, dadurch gekennzeichnet, dass die Kreuzschleifen (10, 11) mit den Kurbelzapfen (3, 4) über Lagerrollen (23, 24) gekoppelt sind, die in je einer sich quer zur Kolbenhubbewegung und zur Achse des Kurbelzapfens erstreckenden Langlochführung (25, 26) geführt sind.

5. Vorrichtung nach Anspruch 1, dadurch gekennzeichnet, dass die Schnecke (17) in ihrer Ruhelage durch eine Feder (18) gehalten wird.

6. Vorrichtung nach den Ansprüchen 1 und 5, dadurch gekennzeichnet, dass die Exzenterhülse (16) und die Schnecke (17) durch eine flüssigkeitsdichte Schraubkappe (19) abgedeckt sind.

7. Vorrichtung nach Anspruch 6, dadurch gekennzeichnet, dass die Schraubkappe (19) mit einem durch eine Plombierung geschützten Stopfen (20) versehen ist.

**Claims**

1. Device for measuring liquid quantities, with two cylinders arranged opposite one another in a housing, the pistons (1, 2) of which form separate working chambers towards the outer dead center points and form a common working chamber towards the inner dead center point, said pistons are connected via a linkage with crankpins (3, 4) that are arranged in relation to a crankshaft (7, 8) formed in two parts and comprising an upper and a lower crankshaft portion, eccentrically and in angularly displaced relationship of 60°, the upper crankshaft portion (7) being connected with means (29) above the cylinder housing which supply the liquid to be measured via channels (30) provided for it and which communicate the liquid with a drain, characterized in that the linkage interconnecting the pistons (1, 2) with the crankpins (3, 4) is arranged as cross-slides (10, 11) which mutually are guided in parallel, that the crankpins (3, 4) are carried by a guide disk (5) that is arranged in spaced-apart relationship between the shaft ends (7, 8) of the crankshaft and that for adjusting the stroke of the piston (2) associated with the lower crankshaft portion (8) the corresponding crankpin (4) is journaled in an eccentric sleeve (16) that turns with the lower crankshaft portion (8) and which is held in the rotational direction of the lower crankshaft portion (8) by means of an adjustable worm (17) with which it meshes.

2. Device according to claim 1, characterized in that the cross-slides (10, 11) are fastened at one end to the associated piston (1, 2) and are guided at their opposite end in longitudinal slots (21, 22) in respective neighboring cross-slides, which are spaced apart by a distance to receive the guide disk (5) between them.

3. Device according to claim 2, characterized in that the ends of the cross-slides (10, 11) that extend away from the pistons carry slide pieces (13, 14) secured by means of screws (12, 15) that run in the longitudinal slots (21, 22) of the respective adjacent cross-slide.

4. Device according to claim 1, characterized in that the cross-slides (10, 11) are coupled with the crankpins (3, 4) by means of bearing rollers (23, 24) which are each guided in a guide slot (25, 26) that extends transversely to the piston stroke movement and to the axis of the crankpins.

5. Device according to claim 1, characterized in that the worm (17) is held in its position of rest by means of a spring (18).

6. Device according to claims 1 and 5, characterized in that the eccentric sleeve (16) and the worm (17) are covered by a liquid-tight sealing screw cover (19).

7. Device according to claim 6, characterized in that the screw cap (19) is provided with a plug (20) that is protected by leading.

**Revendications**

1. Dispositif pour mesurer une quantité débitée de liquide, comportant deux cylindres montés en opposition dans un carter pour deux pistons (1, 2), dont les points morts hauts déterminent des chambres de travail séparées, et dont les points morts bas déterminent une chambre de travail commune; ces deux pistons étant associés par un système d'embiellage à des manetons (3, 4) d'un vilebrequin en deux parties, comportant une partie supérieure (7) et une partie inférieure (8), par rapport auxquelles les deux manetons sont excentrés et décalés d'un angle de 60° l'un par rapport à l'autre; la partie supérieure (7) du vilebrequin étant reliée à un organe approprié (29), pour faire arriver par des canaux prévus à cet effet (30) le liquide dont il s'agit de mesurer le débit, et pour mettre en communication ce liquide avec un orifice de sortie; ce dispositif étant caractérisé en ce que le système d'embiellage qui assure la liaison entre les pistons (1, 2) et les manetons (3, 4) est constitué par deux plaques coulissantes parallèles (10, 11), disposées face à face et guidées l'une par l'autre; en ce que les manetons (3, 4) sont montés dans un disque de guidage (5), qui est disposé entre les extrémités des deux parties (7, 8) du vilebrequin, en étant séparé de ces deux extrémités; et en ce que la partie inférieure (8) du vilebrequin est montée dans son palier par l'intermédiaire d'une douille excentrique (16), solidaire en rotation de cette partie du vilebrequin, et permettant de faire varier la course du piston correspondant (2), grâce à une vis sans fin de réglage (17), montée extérieurement sur la douille excentrique (16) pour modifier à la demande le calage angulaire de cette douille par rapport à la partie associée (8) du vilebrequin.

2. Dispositif selon la revendication 1, caractérisé en ce que chacune des deux plaques coulissantes (10, 11) comporte, au voisinage de son extrémité fixée au piston correspondant (1, 2), une fente longitudinale (21, 22), pour assurer le guidage de l'autre plaque coulissante (10, 11), avec un écartement approprié pour le montage du disque de guidage (5) des manetons entre les deux plaques coulissantes.

3. Dispositif selon la revendication 2, caractérisé en ce que l'extrémité de chaque plaque coulissante (10, 11) porte, à son extrémité opposée au piston associé, une vis de fixation (12, 15), pour un coulisseau (13, 14) adapté à se déplacer dans la fente longitudinale (22, 21) de l'autre plaque coulissante (11, 10).

4. Dispositif selon la revendication 1, caractérisé en ce que les plaques coulissantes (10, 11) sont reliées aux manetons (3, 4) du vilebrequin par des galets (23, 24), qui sont guidés chacun dans un trou allongé (25, 26) de la plaque associée, ce trou allongé ayant une orientation transversale par rapport à l'axe du mouvement du piston et par rapport à l'axe du maneton.

5. Dispositif selon la revendication 1, caractérisé en ce qu'il comporte un ressort (18), pour maintenir la vis sans fin (17) en position de repos.

6. Dispositif selon les revendications 1 et 5, caractérisé en ce que la douille excentrique (16) et la vis sans fin (17) sont recouvertes par un chapeau de protection (19), monté par vissage et étanche aux liquides.

7. Dispositif selon la revendication 6, caractérisé en ce que le chapeau de protection vissé (19) est pourvu d'un bouchon (20) protégé par plombage.

Fig. 1

Fig. 2